# EUROPEAN PATENT APPLICATION

(11) **EP 4 574 754 A1**
(43) Date of publication of application: **25.06.2025**
(21) Application number: 24826947.4
(22) Date of filing: 18.07.2024
(51) Int. Cl.: C01B 25/26, H01M 4/58

(54) **LITHIUM MANGANESE IRON PHOSPHATE POSITIVE ELECTRODE MATERIAL AND PREPARATION METHOD THEREFOR**

(30) Priority: 23.10.2023 CN 202311375375
(71) Applicant: Nantong Reshine New Material Co., Ltd., Nantong, Jiangsu 226010 (CN)
(72) Inventor: LIAN, Lin, Nantong, Jiangsu 226010 (CN); QIN, Jin, Nantong, Jiangsu 226010 (CN); ZHAO, Yunhu, Nantong, Jiangsu 226010 (CN); ZHANG, Xinlong, Nantong, Jiangsu 226010 (CN)
(74) Representative: Zaboliene, Reda
(86) International application number: PCT/CN2024/106191
(87) International publication number: WO 2025/086741

(57) **Abstract**

A lithium manganese iron phosphate positive electrode material and a method for preparing the same are disclosed, which belong to materials of lithium-ion battery. The method includes: mix raw materials and solvent to obtain a first mixture, the raw materials includes a phosphorus-containing compound, a manganese-containing compound, an iron-containing compound, a lithium-containing compound, and a carbon-containing compound; subject the first mixture to a first pretreatment and a first sintering process to form a first sintered material; mix the first sintered material, an additive containing phosphorus, and solvent to obtain a second mixture; subject the second mixture to a second pretreatment and a second sintering process to form a second sintered material, wherein the phosphorus in the additive distributes on particle surface of the second sintered material to form a phosphorus-rich shell layer; subject the second sintered material to post-processing to obtain the lithium manganese iron phosphate positive electrode material. The present disclosure can reduce the powder resistivity of the positive electrode material. Thereby the voltage plateau decay rate is slowed down during the cycling process, and the cycle life of the lithium manganese iron phosphate positive electrode material is improved.

## Description

### CROSS-REFERENCE TO RELATED APPLICATIONS

The application claims priority to Chinese Patent Application No. 202311375375.1 filed on October 23, 2023, with the patent name "lithium manganese iron phosphate positive electrode material and a method for preparing the same", filed in China National Intellectual Property Administration, the contents of which are incorporated by reference herein.

### FIELD

The disclosure relates to lithium-ion batteries, and more particularly, to a lithium manganese iron phosphate positive electrode material and a method for preparing the same.

### BACKGROUND

At present, the commercialized positive electrode materials for lithium-ion batteries mainly include ternary material (such as nickel cobalt manganese lithium), lithium manganate material, and lithium iron phosphate material. Among them, the ternary material has the highest energy density. However, the ternary material is expensive due to the presence of rare metals such as nickel and cobalt, and has poor safety. In commercial applications, it is necessary to add components to prevent thermal runaway at the system level, which further increases the cost of the ternary material. Compared to the ternary material, the lithium manganate material has lower cost. But due to the manganese dissolution and the Jiang-Taylor effect during use, the cycle life of the lithium-ion battery is poor. The safety of the lithium manganate material is also poor. The lithium iron phosphate material has significant safety and cost advantage among the above three materials. After years of development, the industry of the lithium iron phosphate material has become matured in material design and manufacturing technology. The actual application capacity has approached theoretical capacity of the lithium iron phosphate material. The powder compacted density of the lithium iron phosphate material has reached 2.6 g/cc. The potential performance of the lithium iron phosphate material has been fully developed.

With the continuous development of the new energy industry and the continuous progress of material technology, the innovation and progress of the industry continues when the above three material systems have become increasingly mature. Many new positive electrode materials have been proposed, developed and applied, including high-voltage spinel-type nickel-manganese binary material, lithium-rich manganese-based material, and lithium manganese iron phosphate material. Among them, the lithium manganese iron phosphate material has similar safety and capacity to lithium iron phosphate. The voltage platform of the lithium manganese iron phosphate material is about 0.6V higher than the lithium iron phosphate material. The mass energy density of the lithium manganese iron phosphate material is 10% to 20% higher than the lithium iron phosphate material. Therefore, the lithium manganese iron phosphate material is considered as an upgraded version of the lithium iron phosphate material. The lithium manganese iron phosphate material has significant cost advantage of per watt-hour.

However, the lithium manganese phosphate material also has many problems, such as rapid voltage platform decay caused by manganese dissolution during cycling, poor cycle life, and high powder resistivity. The problems hinder the large-scale commercial application of the lithium manganese phosphate material.

### SUMMARY

The main technical problem addressed by the present disclosure is to provide a lithium manganese iron phosphate positive electrode material and a method for preparing the same. A manganese dissolution of a battery is low during cycling.

To solve the technical problem mentioned above, in an embodiment, a method for preparing a lithium manganese iron phosphate positive electrode material is provided according to the present disclosure. The method includes:
mix raw materials and a solvent to obtain a first mixture, the raw materials includes a phosphorus-containing compound, a manganese-containing compound, an iron-containing compound, a lithium-containing compound, and a carbon-containing compound;
subject the first mixture to a first pretreatment process and a first sintering process to form a first sintered material;
mix the first sintered material, an additive containing phosphorus, and a solvent to obtain a second mixture;
subject the second mixture to a second pretreatment process and a second sintering process to form a second sintered material, wherein the second sintering process causes the phosphorus in the additive to be distributed on particle surface of the second sintered material to form a phosphorus-rich shell layer;
subject the second sintered material to a post-processing process to obtain the lithium manganese iron phosphate positive electrode material.

Wherein, the second pretreatment process comprises coarse grinding, fine grinding, and drying, wherein a parameter D50, which characterizes particle size of the second mixture after the coarse grinding, ranges from 0.5µm to 2.0µm, and a parameter D50, which characterizes particle size of the second mixture after the fine grinding, ranges from 0.2µm to 0.5µm.

Wherein, a diameter of grinding beads used for the coarse grinding in the second pretreatment process is 0.6mm to 1.0mm, and a diameter of grinding beads used for the fine grinding in the second pretreatment is 0.2mm to 0.35mm.

Wherein, in the second sintering process, a sintering temperature is 900°C to 1000°C, a heating rate is 2 °C/min to 5 °C/min, and a sintering time is 3h to 15h.

Wherein, the sintering temperature of the second sintering process is 600°C to 700°C.

Wherein, the additive is selected from a group consisting of phosphoric acid, monoammonium phosphate, diammonium phosphate, lithium dihydrogen phosphate, and any combination thereof.

Wherein, an amount of phosphorus element in the additive accounts for 0.05 % to 0.5% of a total mass of the second sintered material.

Wherein, the second mixture further comprises carbonaceous compound, the second sintering process is configured to form a carbon coating layer on a surface of the second sintered material, and the carbonaceous compound is selected from a group consisting of glucose, sucrose, starch, polyethylene glycol, and any combination thereof.

Wherein, the second sintering process is configured to form the carbon coating layer on an outer surface of the phosphorus-rich shell layer.

In addition, it is also necessary to provide a lithium manganese iron phosphate positive electrode material prepared by the above method.

The beneficial effects of the present disclosure are as follows. Compared to the prior art, in the method for preparing the lithium manganese iron phosphate positive electrode material provided by the present disclosure, the phosphorus-containing additive is added during the secondary sintering process. So that after the secondary sintering process, the phosphorus in the additive is distributed on the surface of the particles of the secondary sintering material, forming a phosphorus-rich shell layer. The phosphorus-rich shell layer can prevent the dissolution of manganese during the cycling process and reduce the powder resistivity of the positive electrode material. Thereby the voltage plateau decay rate is slowed down during the cycling process, and the cycle life of the lithium manganese iron phosphate positive electrode material is improved.

### BRIEF DESCRIPTION OF THE DRAWINGS

Implementations of the present technology will now be described, by way of embodiment, with reference to the attached figures. Obviously, the drawings are only some embodiments of the present disclosure. For those of ordinary skill in the art, other drawings can be obtained based on these drawings without creative work.
FIG. 1 is a flowchart of a method for preparing a lithium manganese iron phosphate positive electrode material according to the present disclosure.
FIG. 2 is a comparison chart showing curves of constant current charging ratio of each comparative example and each example.
FIG. 3 is a comparison chart showing curves of capacity retention rate of each comparative example and each example.

### DETAILED DESCRIPTION OF THE DISCLOSURE

Implementations of the disclosure will now be described clearly and completely, by way of embodiments only, with reference to the drawings. Obviously, the described embodiments are only portions of the embodiments of the present disclosure, rather than all the embodiments. For those of ordinary skill in the art, other embodiments obtained based on these embodiments of the present disclosure without creative work can be in the scope of the present disclosure.

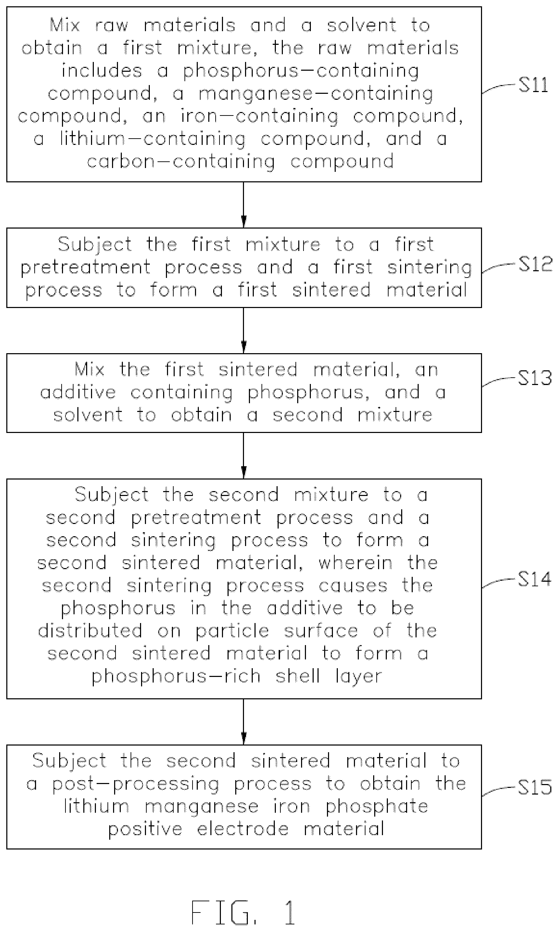

Referring to FIG. 1, which illustrates a flowchart of a method for preparing a lithium manganese iron phosphate positive electrode material according to the present disclosure. The method includes the following steps.

Step S11, raw materials and a solvent are mixed uniformly to obtain a first mixture, the raw materials include a phosphorus-containing compound, a manganese-containing compound, an iron-containing compound, a lithium-containing compound, and a carbon-containing compound.

The raw materials for preparing the lithium manganese iron phosphate positive electrode material are commonly used in related arts. The phosphorus-containing compound is selected from a group consisting of phosphoric acid, lithium dihydrogen phosphate, ammonium dihydrogen phosphate, and any combination thereof. The manganese-containing compound is selected from a group consisting of manganese dioxide, manganous oxide, manganese carbonate, and any combination thereof. The iron-containing compound is selected from a group consisting of ferrous oxalate, iron phosphate, ferric oxide, and any combination thereof. The lithium-containing compound is selected from a group consisting of lithium dihydrogen phosphate, lithium carbonate, lithium phosphate, and any combination thereof. The carbon-containing compound is selected from a group consisting of glucose, sucrose, starch, polyethylene glycol, and any combination thereof. The carbon ions in the carbon-containing compound are mainly used to reduce the iron ions in the iron-containing compound, thereby the raw materials can form the lithium manganese iron phosphate positive electrode material.

To enhance the performance of the lithium manganese iron phosphate positive electrode material, at least one metal selected from a group consisting of Mg, Ti, V, Nb, W, Mo, Er, Co, Ni, and Al can be doped in the raw materials. The metal can improve the structural stability of the lithium manganese iron phosphate positive electrode material. The metal mentioned above may exist in forms of oxides, carbonates, phosphates, metal organics.

A proportion of the raw materials are also commonly used in the related arts to satisfy a ratio of the elements of lithium manganese iron phosphate. Wherein, water can be used as the solvent. Stirring can be employed to facilitate the mixing of raw materials and the solvent, thereby obtaining a first mixture that is uniformly mixed.

Step S12, the first mixture is subjected to a first pretreatment process and a first sintering process to form a first sintered material.

After uniformly mixing the raw materials with the solvent to obtain the first mixture, the first mixture is subject to the first pretreatment. The first pretreatment process includes coarse grinding, fine grinding, and drying in sequence. The coarse grinding and the fine grinding can be carried out using sand milling until particles of the first mixture are grinding to a suitable size. Subsequently, spray drying is performed to remove the solvent. Then, the first sintering process is performed to obtain the first sintered material. During the first sintering process, the raw materials undergo chemical reactions, and residual alkaline lithium carbonate usually remains on a surface of the first sintered material. The residual alkaline lithium carbonate affects the performance of the positive electrode material adversely.

Step S13, the first sintered material, an additive containing phosphorus, and a solvent are mixed uniformly to obtain a second mixture.

After obtaining the first sintered material, the first sintered material is mixed uniformly with the additive and the solvent to obtain the second mixture. The solvent may be water or any other solvent capable of dissolving and dispersing the first sintered material and the additive. The additive contains phosphorus (P) element.

Step S14, the second mixture is subjected to a second pretreatment process and a second sintering process to form a second sintered material. The second sintering process causes phosphorus in the additive to be distributed on particle surface of the second sintered material to form a phosphorus-rich shell layer.

The second mixture is subjected to the second pretreatment process, which includes coarse grinding, fine grinding, and drying. The criteria for coarse and fine grinding are as follows. A parameter D50, which characterizes particle size of the second mixture after the coarse grinding, is 0.5µm to 2.0µm. A parameter D50, which characterizes particle size of the second mixture after the fine grinding, is 0.2µm to 0.5µm. To achieve these criteria, a diameter of grinding beads used for the coarse grinding is 0.6mm to 1.0mm, and a diameter of grinding beads used for the fine grinding is 0.2mm to 0.35mm. During the coarse and fine grinding processes, the additive can also react with the residual alkaline substances on surface of the first sintered material, which can reduce the alkaline content, and improve the service life and safety performance of the positive electrode material.

Subsequently, the second mixture after the second pretreatment process is subjected to the second sintering process. Specifically, a heat rate of the second sintering process is 2 °C/min to 5 °C/min, such as 2 °C/min, 3 °C/min, 4 °C/min, or 5 °C/min. The sintering temperature of the second sintering process is 500 °C to 850 °C, such as 500 °C, 550 °C, 600 °C, 650 °C, 700 °C, 750 °C, 800 °C, or 850 °C. The sintering temperature is 600 °C to 700 °C preferably. And the sintering time of the second sintering process is 3h to 15h.

Wherein, the additive is selected from a group consisting of phosphoric acid, monoammonium phosphate, diammonium phosphate, lithium dihydrogen phosphate, and any combination thereof. An amount of phosphorus element in the additive accounts for 0.05% to 0.5% of a total mass of the second sintered material, such as 0.05 %, 0.1 %, 0.15 %, 0.2 %, 0.25 %, 0.3 %, 0.35 %, 0.4 %, or 0.45 %.

During the second sintering process, the phosphorus in the additive enriches on particle surface of the second sintered material to form a phosphorus-rich shell layer that stabilizes an interface between the positive electrode material and electrolyte.

Step S15, the second sintered material is subjected to a post-processing process to obtain the lithium manganese iron phosphate positive electrode material.

The second sintered material is subjected to the post-processing process such as air jet milling and screening for iron removal to obtain the lithium manganese iron phosphate positive electrode material.

In the method for preparing the lithium manganese iron phosphate positive electrode material provided by the present disclosure, the particle of the positive electrode material is coated with the phosphorus-rich shell layer. The phosphorus-rich shell layer can prevent the dissolution of manganese during the cycling process and reduce the powder resistivity of the positive electrode material. Thereby, the voltage plateau decay rate is slowed down during the cycling process, and the cycle life of the lithium manganese iron phosphate positive electrode material is improved.

In some embodiments, the second mixture may further include a carbonaceous compound. The carbonaceous compound is selected from a group consisting of glucose, sucrose, starch, polyethylene glycol, and any combination thereof. During the second sintering process, a carbon coating layer is formed on the particle surface of the second sintered material. The carbon coating layer is located on an outer surface of the phosphorus-rich shell layer. The carbon coating layer can further reduce the powder resistivity of the positive electrode material and enhance the cycle life of the lithium manganese iron phosphate positive electrode material.

Based on the same invention concept, a lithium manganese iron phosphate positive electrode material is further provided according to the present disclosure. The lithium manganese iron phosphate positive electrode material is prepared by the method of the above embodiment. This embodiment has the same beneficial effects as the above embodiment and will not be repeated here.

Based on the same invention concept, a lithium-ion battery is further provided according to the present disclosure. The lithium-ion battery includes the lithium manganese iron phosphate positive electrode material mentioned in the above embodiment. Of course, the lithium-ion battery further includes a negative electrode material, a separator, and an electrolyte disclosed in the related arts. The lithium-ion battery has the same beneficial effects as the above embodiment and will not be repeated here.

The following examples and comparative examples are used to illustrate the performance improvement in the technical solution according to the present disclosure.

A positive electrode material was prepared according to the following steps S101 - S105 and recorded as Example 1.

Step S101, 17.9 kg of lithium carbonate, 66.9 kg of iron phosphate, 8.53 kg of glucose, 52 kg of manganic oxide, 69.9 kg of lithium dihydrogen phosphate, 1.803 kg of magnesium carbonate, 0.144 kg of titanium dioxide, and 0.495 kg of niobium pentoxide were mixed with 220 kg of water to obtain the first mixture.

Step S102, the first mixture was introduced into a sand mill for coarse grinding to obtain coarse grinding particles. A diameter of the zirconia bead was 0.6 mm, and a particle size D50 of the coarse grinding particle was 1.3µm. Then, the coarse grinding particles were introduced into the sand mill again for the fine grinding to obtain fine grinding particles. A diameter of the of the zirconia bead was 0.3mm, and a particle size of the fine grinding particle was 0.35µm. Then spray drying were carried out, with an inlet temperature of spray drying being 250°C and an outlet temperature being 90°C. Then, the first sintering process was carried out under inert atmosphere protection conditions. The sintering temperature was 650 °C with a rising rate of 3 °C/min, and the sintering time was 7 hours. And finally, a cooling process was carried out to obtain the first sintered material.

Step S103, 100 kg of the first sintering material mentioned above, 3.0 kg of glucose, 6.0 kg of polyethylene glycol with a molecular weight of 6000, and 0.8 kg of lithium dihydrogen phosphate additive were mixed and stirred with 110 kg of water uniformly to obtain the second mixture.

Step S104, the second mixture was introduced into a sand mill for coarse grinding to obtain coarse grinding particles. A diameter of the zirconia bead was 0.6mm, and a particle size D50 of the coarse grinding piratical was 0.8µm. Then, the coarse grinding particles were introduced into the sand mill again for fine grinding to obtain of fine grinding particles. A diameter of the zirconia bead was 0.3mm, and a particle size D50 of the fine grinding piratical was 0.3µm. Then spray drying was carried out, with an inlet temperature of spray drying being 250°C and an outlet temperature being 90°C. Then, the second sintering process was carried out under inert atmosphere protection conditions. The sintering temperature was 700 °C with a rising rate of 3 °C/min, and the sintering time was 7 hours. Finally, a cooling process was carried out to obtain the second sintered material.

Step S105, the second sintered material was subjected to airflow crushing and screening to remove iron, thereby the lithium manganese iron phosphate positive electrode material of Example 1 was obtained.

### Example 2

Example 2 differs from Example 1 in that, the amount of lithium dihydrogen phosphate additive used in step S103 was 1.2 kg, and the other steps were the same as Example 1. Then the lithium manganese iron phosphate positive electrode material of Example 2 was obtained.

### Example 3

Example 3 differs from Example 1 in that, the amount of lithium dihydrogen phosphate additive used in step S103 was 1.6 kg, and the other steps were the same as Example 1. Then the lithium manganese iron phosphate positive electrode material of Example 3 was obtained.

### Comparative Example

Comparative Example differs from Example 1 in that, in step S103, the above-mentioned additive was not added, and the other steps were the same as Example 1. Then the lithium manganese iron phosphate positive electrode material of Comparative Example was obtained.

Referring to Table 1, which shows the comparison among the performance data of the Examples and the Comparative Example. The pH value, residual alkali content, compacted density of powder, and resistivity of the positive electrode materials of Examples 1, 2, 3, and the Comparative Example were tested. The positive electrode materials of Examples 1, 2, 3, and the Comparative Example were made into button batteries separately using the same method. Then, the parameters characterizing electrical performance, including 0.1C gram capacity, initial efficiency, and 1.0C gram capacity, were measured using methods disclosed in the prior art.

As shown in Table 1, with the increase of the additive content, the residual alkali content and pH of the positive electrode materials significantly decrease, and the gram capacity first increases and then decreases. In addition, with the increase of the additive content, the powder resistivity of the positive electrode materials was significantly improved, indicating that phosphorus-rich shell layer was formed on the particle surfaces of the positive electrode materials prepared by the present disclosure, thereby reducing the powder resistivity of the positive electrode materials.

**Table 1, the performance data of the Examples and the Comparative Example.**

| Project | | Unit | Comparative Example | Example 1 | Example 2 | Example 3 |
|---|---|---|---|---|---|---|
| pH | | / | 10.35 | 9.52 | 8.87 | 8.43 |
| Residual alkali content | Li₂CO₃ | ppm | 3560 | 2134 | 1535 | 732 |
| Compacted density of powder (150Mpa) | | g/cc | 2.32 | 2.35 | 2.37 | 2.37 |
| Resistivity (150Mpa) | | Ohm.cm | 578 | 102 | 73 | 54 |
| Electrical performan ce 2.5~4.5V | 0.1C gram capacity | mAh/g | 153.2 | 155.7 | 154.3 | 152.1 |
| | Initial efficienc y | % | 96.1 | 97.3 | 97.1 | 96.3 |
| | 1.0C gram capacity | mAh/g | 141.2 | 144.5 | 142.1 | 139.5 |

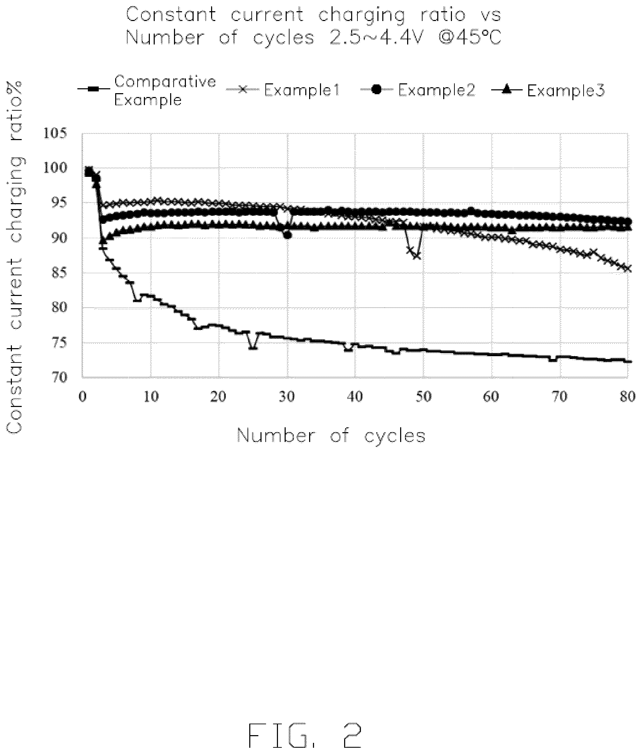

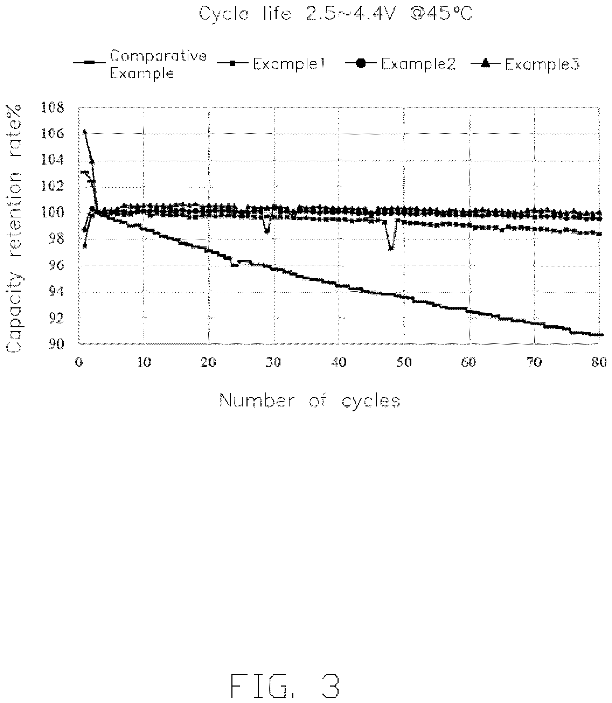

Furthermore, please refer to FIGs. 2 and 3, which are performance characterization of constant current charging ratio and capacity retention rate, respectively. It can be seen that, with the increase of the additive content, the cycle life of the positive electrode material is greatly improved, and the decay rate of the constant current charging ratio during the cycle is significantly reduced. Which indicates that the positive electrode materials prepared by the present disclosure can prevent the dissolution of manganese during the cycle, thereby slowing down the decay rate of the voltage plateau during the cycle and improving the cycle life of the lithium manganese iron phosphate positive electrode material.

The disclosure is illustrative only, which may not limit the patent scope of the present disclosure. Those skilled in the art can make other changes and modifications according to the technical idea of the present disclosure, or directly or indirectly applied the art in other related technical fields, all such changes, modifications and applications fall within the protective scope of the claims of the present disclosure.

## Claims

1. A method for preparing a lithium manganese iron phosphate positive electrode material, **characterized in that**, comprising:
mixing raw materials and a solvent to obtain a first mixture, the raw materials comprising a phosphorus-containing compound, a manganese-containing compound, an iron-containing compound, a lithium-containing compound, and a carbon-containing compound;
subjecting the first mixture to a first pretreatment process and a first sintering process to form a first sintered material;
mixing the first sintered material, an additive containing phosphorus, and a solvent to obtain a second mixture;
subjecting the second mixture to a second pretreatment process and a second sintering process to form a second sintered material, wherein the second sintering process causes the phosphorus in the additive to be distributed on particle surface of the second sintered material to form a phosphorus-rich shell layer; and
subjecting the second sintered material to a post-processing process to obtain the lithium manganese iron phosphate positive electrode material.

2. The method of claim 1, **characterized in that**, the second pretreatment process comprises coarse grinding, fine grinding, and drying, wherein a parameter D50, which characterizes particle size of the second mixture after the coarse grinding, ranges from 0.5µm to 2.0µm, and a parameter D50, which characterizes particle size of the second mixture after the fine grinding, ranges from 0.2µm to 0.5µm.

3. The method of claim 2, **characterized in that**, a diameter of grinding beads used for the coarse grinding in the second pretreatment process is 0.6mm to 1.0mm, and a diameter of grinding beads used for the fine grinding in the second pretreatment is 0.2mm to 0.35mm.

4. The method of claim 1, **characterized in that**, in the second sintering process, a sintering temperature is 900°C to 1000°C, a heating rate is 2 °C/min to 5 °C/min, and a sintering time is 3h to 15h.

5. The method of claim 4, **characterized in that**, the sintering temperature of the second sintering process is 600°C to 700°C.

6. The method of claim 1, **characterized in that**, the additive is selected from a group consisting of phosphoric acid, monoammonium phosphate, diammonium phosphate, lithium dihydrogen phosphate, and any combination thereof.

7. The method of claim 6, **characterized in that**, an amount of phosphorus element in the additive accounts for 0.05% to 0.5% of a total mass of the second sintered material.

8. The method of claim 1, **characterized in that**, the second mixture further comprises carbonaceous compound, the second sintering process is configured to form a carbon coating layer on a surface of the second sintered material, and the carbonaceous compound is selected from a group consisting of glucose, sucrose, starch, polyethylene glycol, and any combination thereof.

9. The method of claim 8, **characterized in that**, the second sintering process is configured to form the carbon coating layer on an outer surface of the phosphorus-rich shell layer.

10. A lithium manganese iron phosphate positive electrode material prepared by the method of any one of claims 1-9.
